# EUROPÄISCHE PATENTSCHRIFT

(11) **EP 2 602 084 B1**
(45) Veröffentlichungstag und Bekanntmachung des Hinweises auf die Patenterteilung: **01.02.2017**
(21) Anmeldenummer: 12195824.3
(22) Anmeldetag: 06.12.2012
(51) Int. Cl.: B29C 45/00, B65F 1/02

(54) **Kunststoff-Tonne mit mehreren Anspritzpunkten**
Plastic bin with multiple injection points
Récipient en matière synthétique avec plusieurs points d'injection

(30) Priorität: 08.12.2011 DE 202011052245 U
(43) Veröffentlichungstag der Anmeldung: 12.06.2013
(73) Patentinhaber: Paul Craemer GmbH, 33442 Herzebrock-Clarholz (DE)
(72) Erfinder: Finke, Ralf- Peter, 33330 Gütersloh (DE); Schäfer, Hubert, 33442 Herzebrock-Clarholz (DE)
(74) Vertreter: Habbel, Ludwig

(56) Entgegenhaltungen:
- JP-A- 2005 319 727
- US-A- 3 568 973
- US-A- 3 972 737
- AISA J ET AL: "An example of simulation tools use for large injection moulds design: The CONTENUR(TM) 2400l solid waste container", JOURNAL OF MATERIALS PROCESSING TECHNOLOGY, ELSEVIER, NL, Bd. 175, Nr. 1-3, 1. Juni 2006 (2006-06-01), Seiten 15-19, XP027934757, ISSN: 0924-0136 [gefunden am 2006-06-01]

## Beschreibung

Die Erfindung betrifft eine Kunststofftonne.

Kunststofftonnen sind aus der Praxis bekannt. Es handelt sich dabei um so genannte 2-Rad-Behälter, die als Abfallbehälter dienen und ein Fassungsvermögen bis maximal 240l aufweisen. Gattungsfremd sind hingegen die noch größeren Abfallbehälter, die bis zu 1.000l fassen, als 4-Rad-Behälter ausgestaltet sind und keine tonnen- oder becherförmige Gestalt aufweisen.

Die becherförmigen Kunststofftonnen weisen etwa mittig an der Unterseite der Bodenfläche einen Anspritzpunkt auf, über den während der Herstellung der Kunststofftonne der fließfähige Kunststoff in die Form eingespritzt wird. Der Kunststoff verteilt sich dann in dem Formhohlraum zunächst über die Fläche, welche später den Boden der Kunststofftonne bildet, und anschließend über die Hohlräume, die später die Wände der Kunststofftonne bilden.

Die Fließfront des Kunststoffes, der durch den Formhohlraum fließt, soll dabei möglichst in allen vier Wänden den gleichen Fortschritt machen, so dass die Fließfront aller Wände der Kunststofftonne möglichst gleichzeitig am oberen Rand der Kunststofftonne ankommt. Auf diese Weise wird vermieden, dass zunächst eine Wand gefüllt wird und der Kunststoff von dort in den oberen Wandhohlraum einer benachbarten, noch nicht vollständig gefüllten Wand einströmt. In einem solchen Fall könnte sich nämlich das Problem ergeben, dass die Grenzlinie zwischen diesen beiden Kunststoffströmen, die sich beim Aufeinandertreffen dieser beiden Kunststoffströme ergibt, zu einer Schwachstelle in der Kunststofftonne führen kann. Diese Schwachstelle im oberen Bereich, nahe dem oberen Rand der Kunststofftonne, könnte bei der späteren Handhabung der Kunststofftonne zu deren vorzeitigen Versagen führen, da die Kunststofftonnen üblicherweise am oberen Rand angehoben und gehandhabt werden. Dies trifft insbesondere für Kunststofftonnen zu, die als Abfalltonnen ausgestaltet sind.

Auf Grund der becherförmigen Ausgestaltung der Kunststofftonne mit im Vergleich zur Bodenfläche hohen Wänden besteht in der Praxis das Problem, dass der Kern der Spritzgussform, der den inneren Hohlraum der Kunststofftonne bestimmt, angesichts der beim Spritzvorgang herrschenden Drücke von mehreren hundert bar, häufig mehr als 1000 bar, nicht millimetergenau seine Position beibehalten kann, denn er ist ja als eine Art frei ragender Zapfen nur an seinem einen Stirnende gehalten, welches der Bodenfläche der herzustellenden Kunststofftonne gegenüberliegt.

Aus diesem Grund wird die Wandstärke der Kunststofftonnen so groß bemessen, dass auch bei einem unbeabsichtigten Pendeln oder Ausweichen des Kerns in der Spritzgießform eine ausreichende Festigkeit auf der Wand sichergestellt ist, welche die dünnste Wandstärke aufweist. Die übrigen Wandstärken werden daher üblicherweise so dick ausgeführt, wie es angesichts der Festigkeitseigenschaften des Kunststoffs für den späteren Praxisbetrieb der Kunststofftonne eigentlich nicht notwendig wäre.

Aus der US 3 972 737 A ist ein dünnwandiger Behälter mit mehreren Trennwänden im Innenraum bekannt, der im Boden mehrere Anspritzpunkte aufweist. Dabei weisen die durch die Trennwände geschaffenen mehreren Kammern jeweils einen länglichen, rechteckigen Querschnitt auf, so dass weder der Behälter insgesamt noch die einzelnen Kammern jeweils becherförmig ausgestaltet sind. Im Boden jeder Kammer ist jeweils ein zentraler Anspritzpunkt vorgesehen.

Aus der US 3 568 973 A ist ebenfalls ein Behälter mit mehreren Trennwänden im Innenraum bekannt, der wahlweise in den Wandflächen oder im Boden mehrere Anspritzpunkte aufweist.

Aus dem Dokument XP27934757 ist eine Kunststofftonne bekannt. Die Kunststofftonne weist am Boden zwei Anspritzpunkte auf.

Der Erfindung liegt die Aufgabe zugrunde, eine becherförmige Kunststofftonne dahingehend zu verbessern, dass diese möglichst wirtschaftlich hergestellt werden kann, insbesondere mit einer möglichst geringen Wandstärke hergestellt werden kann.

Diese Aufgabe wird durch eine Kunststofftonne mit den Merkmalen des Anspruchs 1 gelöst.

Die Erfindung schlägt mit anderen Worten vor, dass nicht nur ein zentraler Anspritzpunkt am Boden vorgesehen ist, sondern dass wenigstens zwei Anspritzpunkte am Boden vorgesehen sind. Zwei oder mehr Anspritzpunkte an einem Kunststoffbauteil vorzusehen ist bekannt, um eine schnelle Füllung des Formhohlraums zu ermöglichen. Für die Herstellung der gattungsgemäßen Kunststofftonnen ist dies jedoch nicht erforderlich. Insofern ist der vorliegende Vorschlag zunächst überraschend, weil er eine technisch aufwendigere Spritzgießform als bislang vorschlägt, nämlich eine mit mehreren Anspritzpunkten versehene Spritzgießform, wo bislang ein einziger Anspritzpunkt ausreichend war. Dies scheint zunächst im Sinne einer möglichst wirtschaftlichen Fertigung der Kunststofftonnen eher nachteilig zu sein.

Tatsächlich jedoch ist die Anordnung von zwei oder mehr Anspritzpunkten am Tonnenboden vorteilhaft: Dadurch, dass zwei derartige Anspritzpunkte vorgesehen sind, ist ausgeschlossen, dass beide Anspritzpunkte zentral in der Mitte des Bodens angeordnet sein können. Auf diese Weise ergibt sich bei Verwendung entsprechender Ventile an den Einspritzdüsen der Spritzgießform, dass zwei verschiedene Kunststoffströme während des Einspritzvorgangs unabhängig voneinander dosiert und beeinflusst werden können, so dass auf diese Weise die Ausbreitung der Fließfront des in die Spritzgießform einströmenden Kunststoffs gesteuert werden kann.

Pendelbewegungen des Kerns der Spritzgießform können auf diese Weise beeinflusst werden: entweder anhand des typischen, stets wiederkehrenden Verhaltens dieses Kerns, indem eine entsprechende Anlagensteuerung programmiert wird, welche über die erwähnten Ventile den Einspritzvorgang des Kunststoffs in einen fest programmierten Ablauf steuert und so den mutmaßlichen Bewegungen des Kerns entgegengewirkt. Oder es kann vorgesehen sein, die tatsächlichen Bewegungen des Kerns während des Einspritzvorgangs zu erfassen und die Ventile in Reaktion auf das Verhalten des Kerns anzusteuern, so dass in Echtzeit auf Bewegungen des Kerns reagiert werden kann und auf diese Weise unerwünschten Bewegungen des Kerns entgegengewirkt werden kann.

Vorschlagsgemäß sind weiterhin die Anspritzpunkte am Rand des Bodens vorgesehen sein, also nahe einer an den Boden grenzenden Wand und dementsprechend weit entfernt von dem Mittelpunkt der Bodenfläche. Auf diese Weise wirkt sich eine Beeinflussung der Einspritzdüsen bzw. Einspritzventile unmittelbar auf das Fliesverhalten des Kunststoffs in der benachbarten Wand aus, so dass hierdurch die von dieser Wandfläche auf den Kern einwirkenden Kräfte optimal beeinflusst werden können.

Vorschlagsgemäß ist schließlich vorgesehen, dass jeder Wand ein eigener Anspritzpunkt zugeordnet ist. Unabhängig von dem Abstand des Anspritzpunktes zu der jeweiligen Wand wird sich dadurch, dass von jedem Anspritzpunkt der dort einströmende Kunststoff den anderen Kunststoffströmen auszuweichen bestrebt ist, ein Strömungsverhalten in der Art ergeben, dass von diesem Anspritzpunkt der Kunststoff in die diesem Anspritzpunkt zugeordnete Wand strömt, so dass für jede der vorgesehenen Wände jeweils individuell der Fließfortschritt des Kunststoffs und somit die auf den Kern von dieser Wandfläche her einwirkenden Kräfte bestimmt werden können.

Vorteilhaft ist der jeweilige Anspritzpunkt mittig zu der ihm zugeordneten Wand angeordnet, so dass auf diese Weise sichergestellt ist, dass der aus diesem Anspritzpunkt austretende Kunststoff sich möglichst gleichmäßig über die zugeordnete Wandfläche verteilt, wenn er vom Boden nach oben zum oberen Rand der Kunststofftonne bzw. zu dem entsprechenden in der Spritzgießform vorgesehenen Hohlraum strömt.

Angesichts der hohen Einspritzdrücke ist der Einfluss der Schwerkraft auf die Verteilung der Kunststoffschmelze vernachlässigbar. Während des Herstellungsverfahrens kann daher vorgesehen sein, dass der Boden der Kunststofftonne unten vorgesehen ist oder aber auch seitlich oder gar oben. Wenn von einem "unten" vorgesehenen Boden und einem "oberen Rand" und von einem "Aufsteigen" der Kunststoffschmelze vom Boden zum oberen Rand die Rede ist, so bedeutet dies im Rahmen des vorliegenden Vorschlags lediglich eine Orts- oder Richtungsangabe, die Bezug nimmt auf die später aufrecht stehende Kunststofftonne.

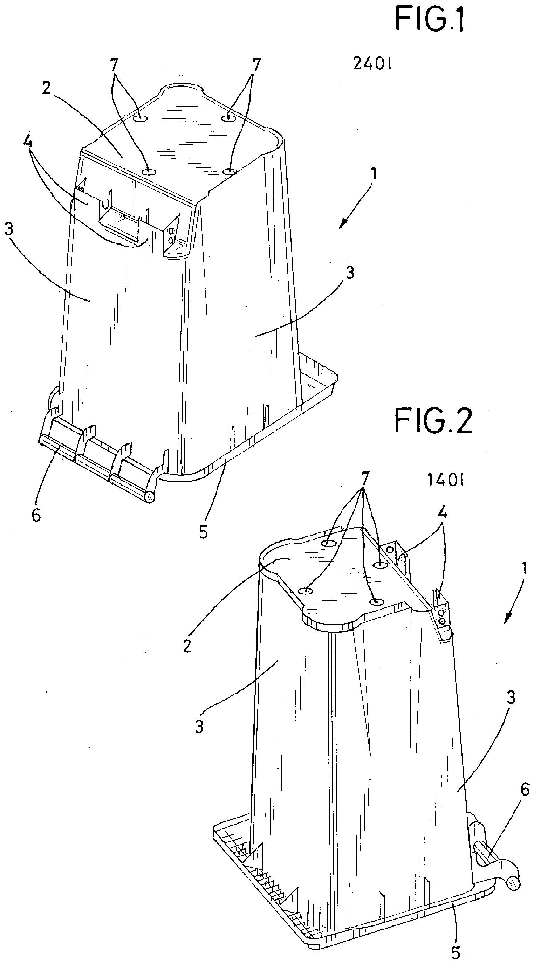

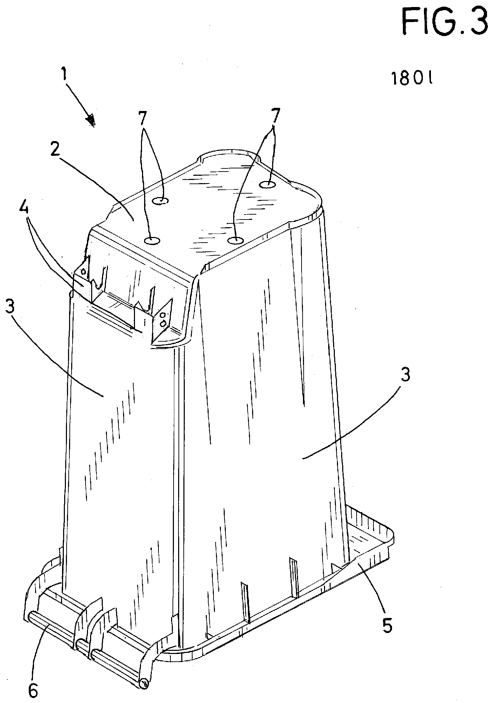

Ein Ausführungsbeispiel der Erfindung wird anhand der rein schematischen Zeichnungen nachfolgend näher erläutert. Dabei zeigen die
- Fig. 1 - 3: drei unterschiedliche Ausführungsbeispiele von Kunststofftonnen mit unterschiedlichen Fassungsvermögen.

In den Zeichnungen ist jeweils mit 1 insgesamt eine Kunststofftonne bezeichnet, die zur Herstellung eines Abfallbehälters dient. Das in den Zeichnungen jeweils dargestellte Bauteil ist einstückig aus Kunststoff gegossen.

Es weist einen Boden 2 sowie jeweils vier Wände 3 auf. Nahe dem Boden 2 sind Achsaufnahmen 4 für eine Achse mit zwei Laufrädern vorgesehen.

Am oberen Ende der Wände 3 ist ein umlaufender oberer Rand 5 vorgesehen sowie eine Scharnierachse 6, die zu einer scharnierartigen Befestigung eines Deckels dient und die auch als Handgriff der Abfalltonne genutzt werden kann.

Am Boden 2 sind bei jedem der drei Ausführungsbeispiele vier Anspritzpunkte 7 vorgesehen, die jeweils etwa mittig neben einer an den Boden 2 angrenzenden Wand 3 angeordnet sind.

Im Unterschied zu Anspritzpunkten, die auf der Wandfläche selbst oder im Bereich des oberen Randes 5 vorgesehen sein könnten, dienen die Anspritzpunkte 7 am Boden 2 nicht einfach dazu, gleichzeitig mehr Material in den Formhohlraum der Spritzgießform einbringen zu können. Die Anordnung der Anspritzpunkte 7 ausschließlich am Boden 2 bewirkt vielmehr, dass bei der Herstellung der Kunststofftonne 1 der Fortschritt der Fließfront des Kunststoffs individuell für jede der vier Wände 3 gesteuert werden kann, indem die Ventile in der Spritzgießform unterschiedlich angesteuert werden können, also je nach Bedarf ganz oder teilweise geöffnet oder geschlossen werden können.

Auf diese Weise kann sichergestellt werden, dass der Kern der Spritzgießform optimal positioniert verbleibt und nicht zur einen oder anderen Wandfläche hin pendelnd ausweicht. Daraus wiederum folgt, dass die Wandstärken minimiert werden können, da die ansonsten herstellungsbedingt erforderlichen Sicherheitstoleranzen für die Wandstärken reduziert werden können. Auf diese Weise kann die Kunststofftonne 1 besonders leichtgewichtig, materialsparend und preisgünstig hergestellt werden.

## Patentansprüche

1. Kunststofftonne,
mit einem Boden
und mit mehreren Wänden, die sich vom Boden bis zu einem oberen Rand der Kunststofftonne erstrecken,
wobei die Kunststofftonne im Wesentlichen becherförmig ausgestaltet ist, indem die Höhe der Wände größer ist als die Breite und die Tiefe des Bodens,
der Boden und die Wände ein gemeinsames, einstückig gespritztes Bauteil bilden,
ausschließlich am Boden ein Anspritzpunkt vorgesehen ist, und wenigstens zwei Anspritzpunkte (7) am Boden (2) vorgesehen sind,
**dadurch gekennzeichnet dass** die Anspritzpunkte (7) am Rand des Bodens (2), nahe einer an den Boden (2) grenzenden Wand (3) vorgesehen sind, und jeder Wand (3) ein eigener Anspritzpunkt (7) zugeordnet ist.

2. Kunststofftonne nach Anspruch 1,
**dadurch gekennzeichnet,**
**dass** der Anspritzpunkt (7) mittig zur Wand (3) angeordnet ist.

## Claims

1. Plastic bin
comprising a bottom
and several walls which extend from the bottom to a top edge of the plastic bin, where the plastic bin is substantially cupular in shape i.e. the height of the walls is greater than the width and the depth of the bottom,
the bottom and the walls form one single component which is injection-moulded in one piece,
an injection point is provided on the bottom only and at least two injection points (7) are provided on the bottom (2),
**characterised in that**
the injection points (7) are provided at the edge of the bottom (2) close to a wall (3) adjoining the bottom (2),
and to each of the walls is assigned an injection point (7) of its own.

2. Plastic bin in accordance with claim 1,
**characterised in that**
the injection point (7) is arranged centrally with reference to the wall (3).

## Revendications

1. Poubelle en matière plastique
comprenant un fond
et plusieurs parois qui s'étendent du fond vers un bord supérieur de la poubelle en matière plastique,
sachant que la poubelle en matière plastique est configurée essentiellement en forme de gobelet dont la hauteur des parois est supérieure à la largeur et à la profondeur du fond,
dont le fond et les parois forment un composant monobloc commun en plastique injecté,
dont un point d'injection est prévu exclusivement au fond et dont au moins deux points d'injection (7) sont prévus au fond (2),
**caractérisée en ce que** les points d'injection (7) sont prévus sur le bord du fond (2), près d'une paroi (3) limitrophe du fond (2),
et qu'à chaque paroi (3) est attribué son propre point d'injection (7).

2. Poubelle en plastique selon la revendication 1,
**caractérisée en ce que**
le point d'injection (7) est agencé centré par rapport à la paroi (3).
